# EUROPEAN PATENT SPECIFICATION

(11) **EP 1 605 767 B1**
(45) Date of publication and mention of the grant of the patent: **28.09.2011**
(21) Application number: 04710567.1
(22) Date of filing: 12.02.2004
(51) Int. Cl.: A23B 4/20, A23J 1/04

(54) **PROCESS FOR IMPROVEMENT OF MEAT QUALITY IN FISH, PROTEIN HYDROLYSATE AND METHOD OF PRODUCING A PROTEIN HYDROLYSATE**
VERFAHREN ZUR VERBESSERUNG DER FLEISCHQUALITÄT VON FISCH,PROTEINHYDROLYSAT UND VERFAHREN ZUR HERSTELLUNG EINES PROTEINHYDROLYSATS
PROCEDE D'AMELIORATION DE LA QUALITE DE LA CHAIR DE POISSON, HYDROLYSAT DE PROTEINES ET PROCEDE DE PRODUCTION D'UN HYDROLYSAT DE PROTEINES

(30) Priority: 12.02.2003 NO 20030684
(43) Date of publication of application: 21.12.2005
(73) Proprietor: Marine Bioproducts AS, 5393 Storebø (NO)
(72) Inventor: HAGEN, Harald, (NO); SANDNES, Kjartan, N-5152 Bønes (NO)
(74) Representative: Acapo AS
(86) International application number: PCT/NO2004/000043
(87) International publication number: WO 2004/071202

(56) References cited:
- EP-A1- 0 031 631
- US-A- 3 989 851
- PATENT ABSTRACTS OF JAPAN & JP 62 036 165 A (AMOU SUISAN KK) 17 February 1987
- KIM S.-K., ET AL.: 'Isolation and Characterization of Antioxidative Peptides from Gelatin Hydrolysate of Alaska Pollack Skin' J. AGRIC. FOOD CHEM. vol. 49, 2001, pages 1984 - 1989, XP002979282
- JUN S.-Y., ET AL.: 'Purification and characterization of an antioxidative peptide from enzymatic hydrolysate of yellowfin sole (Limanda aspera) frame protein' EUR. FOOD RES. TECHNOL. vol. 219, 2004, pages 20 - 26, XP002979283
- SHAHIDI F., ET AL.: 'Production and characteristics of protein hydrolysates from capelin (Mallotus villosus)' FOOD CHEMISTRY vol. 53, 1995, pages 285 - 293, XP002979284
- PATENT ABSTRACTS OF JAPAN & JP 02 113 859 A (NITTO DENKO CORP ET AL.) 26 April 1990

## Description

### FIELD OF THE INVENTION

The present invention relates to processes for improving the characteristics of the meat quality in products, and also a protein hydrolysate made from a fish material.

In general, the present invention relates to a use of a protein hydrolysate from fish for injection into fish or fish meat to improve the characteristics of the fish meat.

### BACKGROUND AND PRIOR ART

In connection with this project, a preliminary search was carried out in the patent literature to find applications of protein hydrolysate.

JP-A-57125648 describes a brine containing protein hydrolysate that can be injected into meat to increase the ability to retain water, and also to improve the taste.

EP-B1-797927 describes a protein hydrolysate that can be injected into raw meat.

US-A-6303162 describes injection of brine that contains a protein hydrolysate into meat.

Patent abstracts of Japan JP 62 036 165 A discloses a method for the production of ground fish meat and its further processing by means of partial freezing and addition of a protein hydrolysate.
Shahidi et al.: Production and characteristics of protein hydrolysates from capelin (Mallotus villosus) FOOD CHEMISTRY vol 53., 1995, pages 285-293, XP002979284 describes a method for the production of a protein hydrolysate from capelin.

From the publications given above, use of a protein material or a hydrolysed protein material, i.e. a protein hydrolysate, made from animal meat or a plant material for injection Into animal meat, is known.

However, the present invention relates to the use of a protein hydrolysate from fish, by injection of this material into fish fillets. The invention is as defined in the claims.

Large amounts of fish raw material get lost, or are not greatly utilised in the processing of fish today. From the whole fresh fish and to the finished products fresh fillet and salted/smoked fillet, the extent of utilisation, in the form of fraction of edible goods from the process, is about 50%. Thus, there is a large potential for increasing the fraction of consumer product by better utilisation of the by-products.

The present invention has shown that it is possible to produce a protein hydrolysate from fish by-products which can be added to the fish fillets. A better utilisation of the raw materials is achieved, at the same time as the quality parameters for the fish fillets are maintained or improved, and also with the storage capacity of the product being maintained or improved.

Thus the present invention relates to a process to improve and/or maintain the lightness and colour characteristics of a fish fillet, where a protein hydrolysate is added to the fish fillet. The protein hydrolysate is preferably made from a protein-containing fish material. Furthermore, it is preferred that the protein hydrolysate is made from bone off-cuts from the fish processing industry, such as the bone off-cuts from salmon off-cuts.

It is especially preferred that the protein hydrolysate is made in accordance with the processing steps described in example 1. A preferred aspect of the invention uses fish fillet from salmon. In another aspect of the invention, the mentioned fish fillet is subjected to a smoking process or another form of wanted processing after the addition of protein hydrolysate.

Furthermore, the present invention relates to a process to improve the keeping quality and freshness of a fish fillet, where a protein hydrolysate is added to the fish fillet.

A further aspect of the invention relates to a process to reduce the development of rancidity in a fish fillet, where a protein hydrolysate is added to the fish fillet.

For these procedures (improve the keeping quality and/or reduce rancidity) it is preferred that the protein hydrolysate is made from a protein-containing fish material, for example in the form of bone off-cuts from the fish processing industry. One embodiment uses off-cuts from salmon. For example, the protein hydrolysate can be made in accordance with the processing steps described in example 1. Furthermore, the fish fillet can be subjected to a smoking process, or another wanted processing, after addition of the hydrolysate.

The present invention also relates to a protein hydrolysate, characterised in that it is made from fish by an enzymatic hydrolysis of a fish material, whereupon the water-soluble, protein-containing fraction is separated by decanting, and where the protein hydrolysate is thereafter preferably concentrated.

It is preferred that the fish material is off-cuts from the fish industry, and can contain off-cuts with bone fractions. Salmon can be used as the fish material.

The invention also relates to a procedure for manufacture of a protein hydrolysate from fish, where water, having a temperature of 40-80 °C, preferably about 60 °C, is added to a fish material at a fish:water ratio of 1.0:0.6 to 1.0:1.0 based on weight:weight, and where the mixture is stirred where the temperature being kept at a temperature level suitable to achieve satisfactory enzymatic activity.

Protamex is preferably used as the enzyme material, and the mixture is preferably kept at a temperature interval of 50 - 60 °C for at least 30 minutes, more preferably at a temperature interval of 56-57 °C for at least 30 minutes, preferably at least 45 minutes.

The invention also relates to the use of a protein hydrolysate as an additive to fish meat or fish forcemeat, to increase the keeping quality of the mentioned fish meat or fish forcemeat, and an application as an additive to fish meat or fish forcemeat to prevent oxidative conversion of components in the mentioned fish meat or fish forcemeat, where addition of the protein hydrolysate replaces or reduces addition of conventional antioxidants to fish meat or fish forcemeat.

### EXPERIMENTAL PART

### Example 1

### Manufacture of protein hydrolysate from fish

Fish bone off-cuts from processing of salmon were kept on ice, with a plastic foil between the ice and the bones, for one to five days before enzymatic hydrolysis. Water at 60°C was added to about 100 kg bone off-cuts and two stirrer blades were rotated at a speed of 200 rpm to mix the water and the fish bones. The temperature of the mixture was around 35-45 °C at the start.

A proteolytic enzyme mixture (Protamex, available from Novozymes Ltd, Denmark) was added to the mixture at a concentration of 1/1000 of the weight of the off-cuts, and the hydrolysis was allowed to run for 2 hours with continuous stirring. The mixture was heated, and the incubation comprised an optimal period of 45 minutes where the temperature of the mixture was 56-57 °C. The reaction mixture was deactivated by addition of steam (10 minutes to 95 °C). Afterwards, the mixture separated into three fractions; heavy insoluble components at the bottom, a watery phase with dissolved proteins (mid-fraction) and a fat fraction at the top. The protein concentration in the water fraction was about 6% (by weight) dependent on the rotational speed of the stirring during the hydrolysis. The protein hydrolysate was concentrated in an APV-evaporator to a protein concentration of about 40% (by weight).

### Example 2

### Application of the protein hydrolysate in smoked salmon

The hydrolysate was injected, together with brine, to salmon fillets for smoking by application of a Fomaco automatic injection machine of the type FGM 16/64F. The composition of the mixtures used in the injection is given in the results section.

### Example 3

### Determination of colour characteristics

Industrial colour of the muscle surface was determined by using a Minolta Chromameter, CR-200 (Minolta Camera Co. Ltd., Osaka, Japan). The detector was placed on the dorsal and the ventral side of the central line in the muscle surface of the fillet, and carried out the measurements in L*a*b* mode, and mean values and standard deviation were determined. The colour was determined by carrying out measurements on five fillets from each combination.

### Example 4

### Keeping quality

### pH

pH in a fresh muscle was measured in a 1:1 mixture of muscle mixture and 0.15 M KCI pa, while pH of conserved muscle was measured in a 1:5 by weight ratio of muscle mixture and water. A PHM 80 Radiometer (Copenhagen, Denmark) with a glass electrode was used and 3-6 parallels of each sample were used to calculate a mean value.

### TBARS

TBARS (Thiobarbituric Acid Reactive Substances) is one of the most common chemical methods to determine the oxidation level in fish muscle. These values were determined in an aqueous trichloroacetic acid extract according to the methods given in Witte et al., 1970 and Dulavik et al., 1998, both of which are incorporated here by reference. Three parallel applications were carried out for each group of muscle sample.

### Example 5

### Testing of sensory characteristics (among them smell, colour, firmness, taste)

Sensory tests were carried out on a smoked, marinated salmon product injected with different concentrations of protein hydrolysate made from salmon off-cuts.

Relative sensory characteristics of the different test products with regard to a total of 16 different test parameters were given by experienced test people according to a scale from 1 to 10.

### RESULTS

### Colour

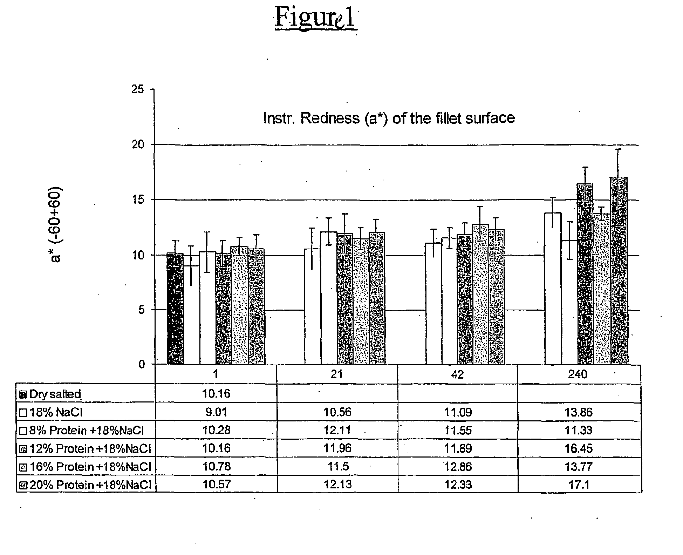

For a series of fish species it is desirable to be able to produce a product with good colour characteristics, and it especially important for salmon to achieve or maintain the characteristic red colour. Therefore, colour analyses were taken of fillets injected with protein hydrolysate. The results are shown in the figures 1-6. Also added to all the samples were an 18% sodium chloride solution and addition of this alone (i.e. without protein hydrolysate) functioned as a control.
Figure 1 shows the instrumental redness (a*) at the fillet surface during 1-42 days cold storage and after 8 months storage in frozen condition of vacuum packed smoked salmon fillets. Each bar represents a mean value of 10 individual colour measurements on a total of 5 fillets, n=5 in each test group.

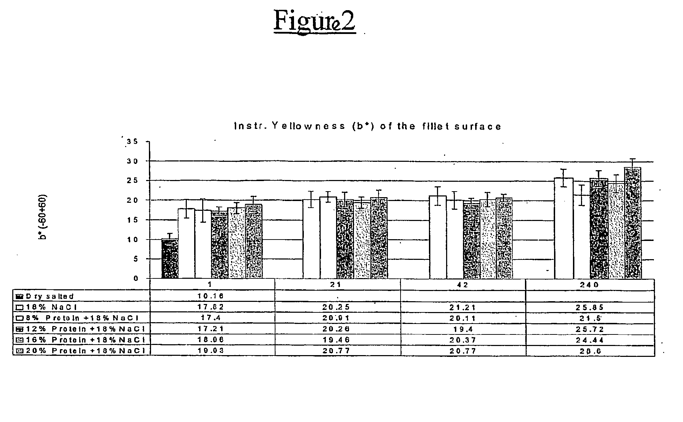

Figure 2 shows instrumental yellowness (b*) at the fillet surface during 1-42 days cold storage and after 8 months storage in frozen condition of vacuum packed smoked salmon fillets. Each bar represents a mean value of 10 individual colour measurements on a total of 5 fillets, n=5 in each test group.

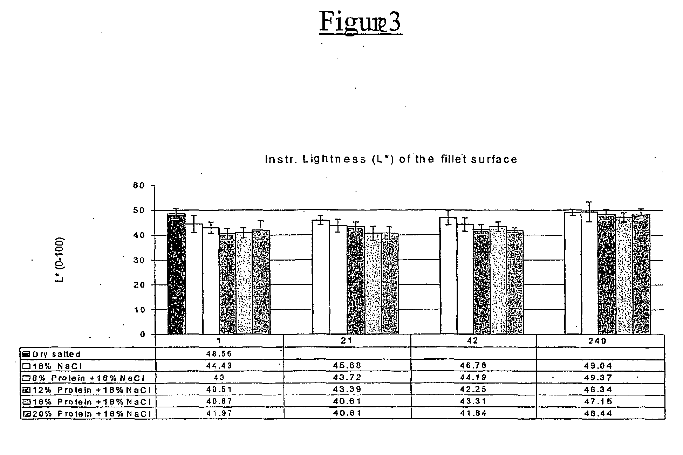

Figure 3 shows instrumental lightness (L*) at the fillet surface during 1-42 days cold storage and after 8 months storage in frozen condition of vacuum packed smoked salmon fillets. Each bar represents a mean value of 10 individual colour measurements on a total of 5 fillets, n=5 in each test group.

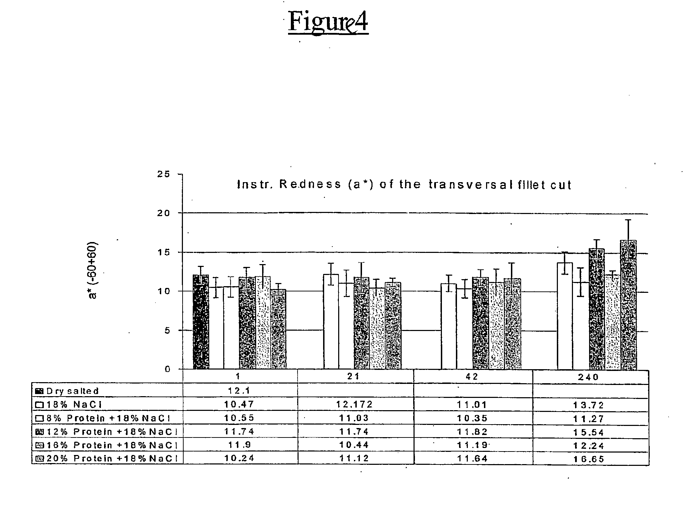

Figure 4 shows instrumental redness (a*) in transversal cuts through the fillet during 1-42 days cold storage and after 8 months storage in frozen condition of vacuum packed smoked salmon fillets. Each bar represents a mean value of 10 individual colour measurements on a total of 5 fillets, n=5 in each test group.

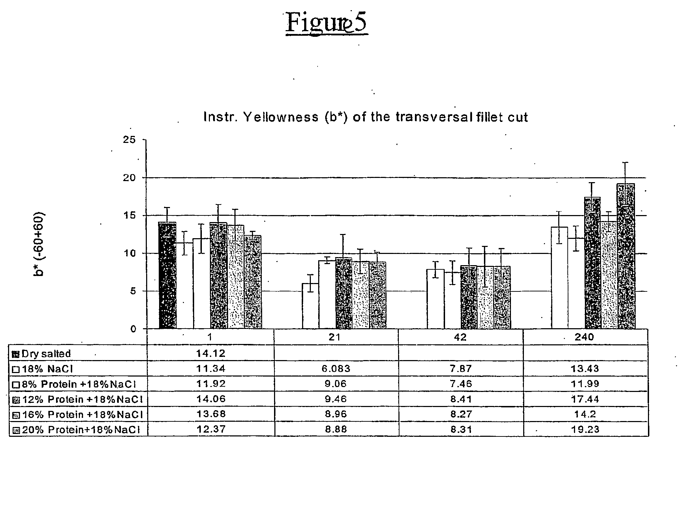

Figure 5 shows instrumental yellowness (b*) in transversal cuts through the fillet during 1-42 days cold storage and after 8 months storage in frozen condition of vacuum packed smoked salmon fillets. Each bar represents a mean value of 10 individual colour measurements on a total of 5 fillets, n=5 in each test group.

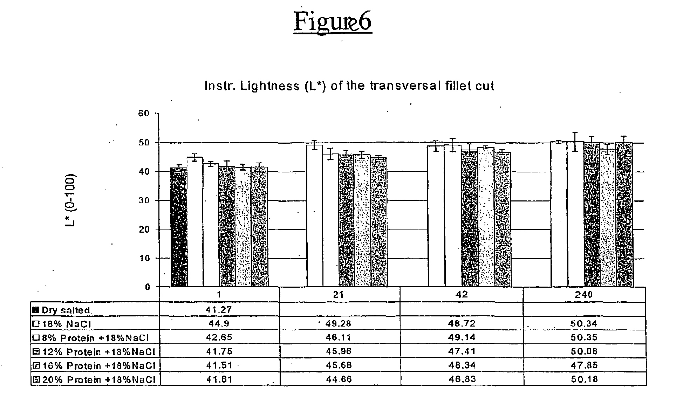

Figure 6 shows instrumental lightness (a*) in transversal cuts through the fillet during 1-42 days cold storage and after 8 months storage in frozen condition of vacuum packed smoked salmon fillets. Each bar represents a mean value of 10 individual colour measurements on a total of 5 fillets, n=5 in each test group.

Surprisingly, it was found that application of the protein hydrolysate gave improved colour characteristics for the salmon fillets. The red colour of the fish was especially improved (figure 1), but the lightness of the fish fillet was also improved. Furthermore, in storage the colour remained for a longer time with the addition of protein hydrolysate than for corresponding control tests without protein hydrolysate.

Thus, an aspect of the present invention is a procedure where a protein hydrolysate is applied to improve and/or maintain the colour characteristics and lightness characteristics of the fish fillet.

### Keeping quality

It is especially important to produce a fillet product with good keeping quality. pH in fillet muscle is used as a parameter to determine the freshness of the fish and breakdown products from bacterial growth will in general lead to a dramatic change in pH.

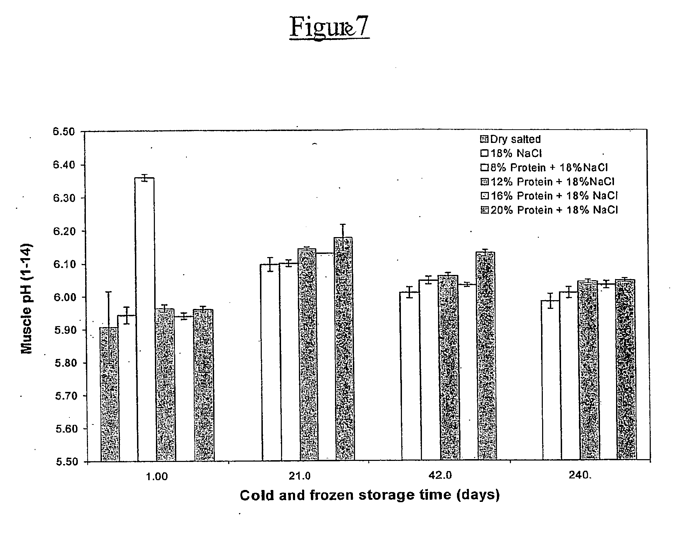

Figure 7 shows pH values in muscle of smoked salmon fillets, vacuum-packed and cold stored for 6 weeks at 4 °C and stored frozen for 8 months at -30°C. Each bar is a mean of 5 fillets, each determined in three parallels.

From the results shown in fig. 7 it can be seen that increasing concentrations of protein hydrolysate has a favourable effect on pH, and thus the fish freshness after different storage times. This is surprising, and constitutes an important aspect of the present invention.

### Reduced rancidity

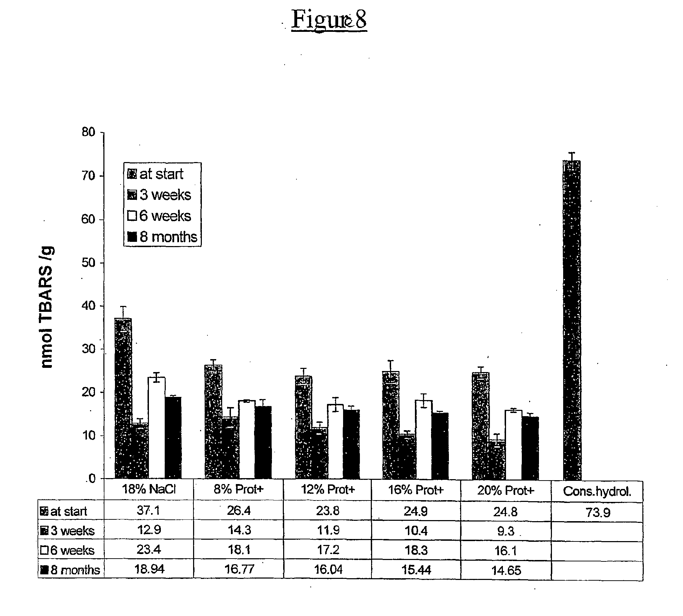

Figure 8 shows TBARS values in smoked fish fillets injected with different marinades at the start, after 3 and 6 weeks cold storage and at 8 months storage in frozen condition.

It can be seen in fig. 8 that the rancidity in the fat determined with the TBARS method was significantly lower in products injected with hydrolysate. An increase in TBARS values of about 0.5 to 1.6 units should have been expected due to addition of hydrolysate, instead reductions in TBARS values were measured in all fillets with added hydrolysate.

This test shows surprisingly that the protein hydrolysate reduces the rancidity, and it is expected that addition of protein hydrolysate can replace, or reduce, the use of anti-oxidants as an additive to prevent oxidation.

### Sensory characteristics (among them smell, colour, firmness, taste)

It is important that a product, to which a protein hydrolysate from fish is added, does not get undesirable characteristics, such as, for example, changed taste or smell. Therefore, a thorough investigation has been carried out where different sensory characteristics have been tested by a test panel of 7-8 trained persons. The results are given in tables 1 and 2 and it surprisingly appears that parameters such as smell and taste are not significantly changed.

It is especially unexpected that there was no development of a rancid and "old" taste at concentrations of protein hydrolysate below 20% protein.

**Table 1**

| | | | | | |
|---|---|---|---|---|---|
| Sensory comparison of four marinated products of smoked salmon fillets at start. Mean values estimated for each sensory characteristic, resulting from ANOVA and Tukey tests. Tests which have the same letter are not significantly different at an alpha level 0.05. N=8 | | | | | |

| Sensory characteristic | Signifi cance | Control 18% NaCl | 8% Protein + 18% NaCl | 12% Protein + 18% NaCl | 20% Protein + 18% NaCl |
|---|---|---|---|---|---|
| 1. Smell of smoke | ns | 5.1a | 4.9a | 5.6a | 5.5a |
| 2. Rancid smell | ns | 0.6a | 0.6a | 0.6a | 0.8a |
| 3. Old/differing smell | ns | 0.9a | 0.5a | 0.5a | 0.8a |
| 4. Loss of moisture | ns | 3.2a | 3.1 a | 3.5a | 3.2a |
| 5. Red colour 5. Red colour | ns | 4.5a | 5.3a | 5.0a | 4.6a |
| 6. Yellow colour | * | 2.7a | 2.0b | 2.2ab | 2.2ab |
| 7. Transversal cut | ns | 6.4a | 7.1a | 6.3a | 6.4a |
| 8. Firmness | * | 5.0ab | 4.0b | 4.4ab | 5.2a |
| 9. Taste of smoke | ns | 4.7a | 4.5a | 4.6a | 4.4a |
| 10. Salt taste | ns | 4.1a | 3.9a | 3.9a | 3.6a |
| 11. Old/differing taste | ns | 1.2a | 0.7a | 0.9a | 1.3a |
| 12. Rancid taste | ns | 1.3a | 1.0a | 0.9a | 0.7a |
| 13. Juicy | ns | 5.6a | 6.0a | 5.9a | 5.9a |
| 14. Chewing resistance | ns | 3.9a | 3.4a | 3.7a | 3.7a |
| 15. Stickiness | ns | 3.6a | 3.9a | 3.6a | 3.6a |
| 16. Aftertaste | ns | 4.7a | 4.5a | 4.4a | 4.5a |

| | | | | | |
|---|---|---|---|---|---|
| Symbols: ***: p<0.001, **: p<0.01, *: p<0,05 ns: not significant (p>0.05) | | | | | |

**Table 2**

| | | | | | |
|---|---|---|---|---|---|
| Sensory comparison of four marinated products of smoked salmon fillets at start. Mean values estimated for each sensory characteristic, resulting from ANOVA and Tukey tests. Tests which have the same letter are not significantly different at an alpha level 0.05. N=7 | | | | | |

| Sensory characteristic | Signifi cance | Control 18% NaCl | 8% Protein + 18% NaCl | 12% Protein + 18% NaCl | 20% Protein + 18% NaCl |
|---|---|---|---|---|---|
| 1. Smell of smoke | ns | 5.5a | 5.3a | 5.4a | 4.8a |
| 2. Rancid smell | ns | 0.5a | 0.5a | 0.4a | 0.3a |
| 3. Old/differing smell | ns | 0.4a | 0.6a | 0.7a | 0.9a |
| 4. Loss of moisture | ns | 3.0a | 3.3a | 3.3a | 3.9a |
| 5. Red colour | * | 4.8c | 5.1bc | 5.8ab | 6.0a |
| 6. Yellow colour | * | 2.3a | 2.1ab | 1.8b | 1.9ab |
| 7. Transverse cut | ns | 6.6a | 6.6a | 7.1a | 7.2a |
| 8. Firmness | ns | 4.1a | 3.8a | 4.5a | 4.7a |
| 9. Taste of smoke | ns | 5.2a | 4.9a | 5.3a | 5.0a |
| 10. Salt taste | ns | 4.6a | 4.3a | 4.3a | 4.1a |
| 11. Old/differing taste | ns | 0.9a | 0.9a | 0.7a | 0.8a |
| 12. Rancid taste | ns | 0.4a | 0.6a | 0.4a | 0.4a |
| 13. Juicy | ns | 6.9a | 6.8a | 7.1a | 7.0a |
| 14. Chewing resistance | ns | 3.2a | 3.4a | 3.3a | 3.4a |
| 15. Stickiness | ns | 4.3a | 4.3a | 4.1a | 4.1a |
| 16. Aftertaste | ns | 5.1a | 4.6a | 5.0a | 4.7a |

| | | | | | |
|---|---|---|---|---|---|
| Symbols: ***: p<0.001, **: p<0.01, *: p<0,05 ns: not significant (p>0.05) | | | | | |

## Claims

1. A process for improving and/or maintaining lightness and colour characteristics of a fish fillet and/or to improve the keeping quality and freshness of a fish fillet, and/or to reduce the development of rancidity in a fish fillet, **characterised in that** a protein hydrolysate is added to the fish fillet.

2. Process in accordance with claim 1,
**characterised in that** the protein hydrolysate is made from a protein-containing fish material.

3. Process in accordance with claim 1,
**characterised in that** the protein hydrolysate is made from bone off-cuts from the fish processing industry.

4. Process in accordance with claim 3,
**characterised in that** the bone off-cut is from salmon off-cuts.

5. Process in accordance with claim 1,
**characterised in that** the protein hydrolysate is made in accordance with the processing steps given in example 1.

6. Process in accordance with claim 1,
**characterised in that** said fish fillet is salmon.

7. Process in accordance with claim 1,
**characterised in that** said fish fillet, after addition of protein hydrolysate, is subjected to a smoking process or other suitable processing.

8. Protein hydrolysate, **characterised in that** it is prepared by a process in accordance with one of the claims 12-14, wherein the isolated water soluble protein containing fraction is essentially free of fat.

9. Protein hydrolysate in accordance with claim 8,
**characterised in that** the fish material is off-cuts from the fish industry.

10. Protein hydrolysate in accordance with claim 9,
**characterised in that** the fish material is off-cuts containing bone fractions.

11. Protein hydrolysate in accordance with claim 9,
**characterised in that** the fish material is off-cuts from salmon.

12. Process for manufacture of a protein hydrolysate from fish, **characterised in that**
i) water of temperature of 40-80°C, preferably about 60°C, is added to a fish material, at a ratio fish:water of 1.0:0.6 to 1.0:1.0 by weight;
ii) a proteolytic enzyme mixture is added, and the mixture is stirred at the same time as the temperature of the mixture is kept for a suitable amount of time at a temperature level suitable for achieving satisfactory enzymatic activity;
iii) the mixture is then deactivated, and three separate phases are formed, an insoluble bottom layer, a water soluble middle layer including the soluble hydrolyzed proteins, and a top fat layer; and the water soluble middle layer is then separated from the other two layers by first decanting of the top layer, and thereafter the middle layer.

13. Process in accordance with claim 12,
**characterised in that** the mixture is kept at a temperature interval of 50-60°C for at least 30 minutes.

14. Process in accordance with claim 13,
**characterised in that** the mixture is kept at a temperature interval of 56-57°C for at least 30 minutes, preferably at least 45 minutes.

15. Use of a protein hydrolysate according to one of the claims 8-11 as an additive to fish meat to increase the storage keeping quality of the mentioned fish meat.

16. Use of a protein hydrolysate according to one of the claims 8-11 as an additive to fish meat or fish forcemeat, to prevent oxidative conversion of components in the mentioned fish meat or fish forcemeat.

17. Use in accordance with claim 16, where the protein hydrolysate replaces or reduces addition of conventional anti-oxidants to fish meat or fish forcemeat.

## Patentansprüche

1. Verfahren zur Verbesserung und/oder Beibehaltung der Helligkeit und Farbcharakteristika eines Fischfilets und/oder zur Verbesserung der Aufbewahrungsqualität und Frische eines Fischfilets und/oder zur Verringerung der Entwicklung von Ranzigkeit eines Fischfilets,
**dadurch gekennzeichnet, dass** dem Fischfilet ein Proteinhydrolysat zugegeben wird.

2. Verfahren nach Anspruch 1,
**dadurch gekennzeichnet, dass** das Proteinhydrolysat aus einem Proteinenthaltenden Fischmaterial hergestellt wird.

3. Verfahren nach Anspruch 1,
**dadurch gekennzeichnet, dass** das Proteinhydrolysat aus Knochenabschnitten aus der Fischverarbeitungsindustrie hergestellt wird.

4. Verfahren nach Anspruch 3,
**dadurch gekennzeichnet, dass** die Knochenabschnitte von Lachs-Knochenabschnitten stammen.

5. Verfahren nach Anspruch 1,
**dadurch gekennzeichnet, dass** das Proteinhydrolysat gemäß den in Beispiel 1 beschriebenen Verarbeitungsschritten hergestellt wird.

6. Verfahren nach Anspruch 1,
**dadurch gekennzeichnet, dass** das Fischfilet Lachs ist.

7. Verfahren nach Anspruch 1,
**dadurch gekennzeichnet, dass** das Fischfilet nach Zugabe des Proteinhydrolysats einem Räucherverfahren oder einer anderen geeigneten Verarbeitung unterzogen wird.

8. Proteinhydrolysat,
**dadurch gekennzeichnet, dass** es durch ein Verfahren gemäß einem der Ansprüche 12-14 zubereitet wird, wobei die Fraktion, welche isoliertes wasserlösliches Protein enthält, im Wesentlichen fettfrei ist.

9. Proteinhydrolysat nach Anspruch 8,
**dadurch gekennzeichnet, dass** das Fischmaterial Abschnitte aus der Fischindustrie sind.

10. Proteinhydrolysat nach Anspruch 9,
**dadurch gekennzeichnet, dass** das Fischmaterial Abschnitte enthaltend Knochenfragmente sind.

11. Proteinhydrolysat nach Anspruch 9,
**dadurch gekennzeichnet, dass** das Fischmaterial Abschnitte von Lachs sind.

12. Verfahren zur Herstellung eines Proteinhydrolysats aus Fisch, **dadurch gekennzeichnet, dass**
i) Wasser mit einer Temperatur von 40-80°C, bevorzugt etwa 60°C, einem Fischmaterial in einem Verhältnis Fisch:Wasser von 1.0:0.6 bis 1,0:1,0 nach Gewicht zugegeben wird;
ii) ein proteolytisches Enzymgemisch zugegeben wird und das Gemisch gerührt wird, während gleichzeitig die Temperatur des Gemisches während eines geeigneten Zeitraums auf einem Temperaturniveau gehalten wird, welches für die Erzielung einer zufriedenstellenden Enzymaktivität geeignet ist.
iii) das Gemisch dann deaktiviert wird und sich drei getrennte Phasen bilden, eine unlösliche Bodenschicht, eine wasserlösliche Mittelschicht, welche die löslichen hydrolisierten Proteine enthält, sowie eine obere Fettschicht; und die wasserlösliche Mittelschicht dann von den anderen zwei Schichten getrennt wird, indem zuerst die obere Schicht und anschließend die Mittelschicht abgegossen wird.

13. Verfahren nach Anspruch 12,
**dadurch gekennzeichnet, dass** das Gemisch während mindestens 30 Minuten in einem Temperaturintervall von 50-60°C gehalten wird.

14. Verfahren nach Anspruch 13,
**dadurch gekennzeichnet, dass** das Gemisch während wenigstens 30 Minuten, vorzugsweise wenigstens 45 Minuten, in einem Temperaturintervall von 56-57°C gehalten wird.

15. Verwendung eines Proteinhydrolysats nach einem der Ansprüche 8-11 als Additiv für Fischfleisch zur Erhöhung der Lager-Aufbewahrungsqualität des erwähnten Fischfleisches.

16. Verwendung eines Proteinhydrolysats nach einem der Ansprüche 8-11 als Additiv für Fischfleisch oder Fischfarce, um die oxidative Umwandlung von Bestandteilen in dem genannten Fischfleisch oder der Fischfarce zu verhindern.

17. Verwendung nach Anspruch 16, wobei das Proteinhydrolysat die Zugabe herkömmlicher Antioxidantien zu Fischfleisch oder Fischfarce ersetzt oder verringert.

## Revendications

1. Procédé pour améliorer et/ou maintenir les caractéristiques de légèreté et de couleur d'un filet de poisson et/ou pour améliorer la qualité de conservation et la fraîcheur d'un filet de poisson, et/ou pour réduire le développement de la rancidité dans un filet de poisson, **caractérisé en ce qu'**un hydrolysat de protéines est ajouté au filet de poisson.

2. Procédé selon la revendication 1, caractérisé n ce que l'hydrolysat de protéines est fait à partir d'un matériau de poisson contenant des protéines.

3. Procédé selon la revendication 1, **caractérisé en ce que** l'hydrolysat de protéines est fait de résidus de coupes d'arêtes provenant de l'industrie de transformation du poisson.

4. Procédé selon la revendication 3, **caractérisé en ce que** les résidus de coupes d'arêtes provient de résidus de coupe de saumon.

5. Procédé selon la revendication 1, **caractérisé en ce que** l'hydrolysat de protéines est fait en accord avec les étapes de traitement données dans l'exemple 1.

6. Procédé selon la revendication 1, **caractérisé en ce que** ledit filet de poisson est du saumon.

7. Procédé selon la revendication 1, **caractérisé en ce que** ledit filet de poisson, après ajout de l'hydrolysat de protéines, est soumis à un procédé de fumaison ou tout autre traitement approprié.

8. Hydrolysat de protéines, **caractérisé en ce qu'**il est préparé selon un procédé selon l'une des revendications 12 à 14, où la fraction contenant des protéines hydrosolubles isolée est essentiellement dépourvue de gras.

9. Hydrolysat de protéines selon la revendication 8, **caractérisé en ce que** le matériau de poisson est constitué de résidus de coupe provenant de l'industrie poissonnière.

10. Hydrolysat de protéine selon la revendication 9, **caractérisé en ce que** le matériau de poisson est constitué de résidus de coupe contenant des fragments d'os.

11. Hydrolysat de protéines selon la revendication 9, **caractérisé en ce que** le matériau de poisson est constitué de résidus de coupe de saumon.

12. Procédé de fabrication d'un hydrolysat de protéines de poisson, **caractérisé en ce que**
i) on ajoute de l'eau à une température comprise entre 40 et 80 °C, de préférence aux alentours de 60°C, au matériau de poisson, à un ratio poisson/eau compris entre 1,0/0,6 et 1,0/1,0 en poids,
ii) on ajoute un mélange d'enzymes protéolytiques, et le mélange est agité tout en maintenant la température du mélange pendant une durée appropriée à un niveau de température approprié pour atteindre une activité enzymatique satisfaisante,
iii) on désactive ensuite le mélange, et trois phases éparées sont formées, une couche inférieure insoluble, une couche médiane hydrosoluble incluant les protéines hydrolysées solubles et une couche supérieure de gras, la couche médiane hydrosoluble étant ensuite séparée des deux autres couches d'abord par décantation de la couche supérieure et ensuite de la couche médiane.

13. Procédé selon la revendication 12, **caractérisé en ce que** le mélange est maintenu à une température comprise entre 50 et 60°C pendant au moins 30 minutes.

14. Procédé selon la revendication 13, **caractérisé en ce que** le mélange est maintenu à une température comprise entre 56 et 57°C pendant au moins 30 minutes, de préférence au moins 45 minutes.

15. utilisation d'un hydrolysat de protéines selon l'une des revendications 8 à 11 comme additif à la chair de poisson ou à la farce de poisson, pour augmenter la qualité de conversation en stockage de la chair de poisson mentionnée.

16. Utilisation d'un hydrolysat de protéines selon l'une des revendications 8 à 11 comme additif à la chair de poisson ou à la farce de poisson, pour empêcher la conversion oxydative des composant dans la chair ou la farce de poisson mentionnée.

17. utilisation selon la revendication 16, **caractérisée en ce que** l'hydrolysat de protéines remplace ou réduit l'ajout d'antioxydants conventionnels à la chair ou à la farce de poisson.
